# EUROPEAN PATENT APPLICATION

(11) **EP 4 306 578 A1**
(43) Date of publication of application: **17.01.2024**
(21) Application number: 23161542.8
(22) Date of filing: 13.03.2023
(51) Int. Cl.: C08J 9/04

(54) **SURFACE MEMBER OF EXTERIOR FLOORING, AND METHOD FOR PRODUCING SAME**

(30) Priority: 13.07.2022 JP 2022112756; 31.08.2022 JP 2022138291
(71) Applicant: Sekisui Chemical Co., Ltd., Osaka 530-8565 (JP)
(72) Inventor: MORI, Kazuhiro, Ehime, 793-0072 (JP); NAGAMORI, Fumitaka, Ehime, 793-0072 (JP); UNO, Mitsuharu, Ehime, 793-0072 (JP)
(74) Representative: Ter Meer Steinmeister & Partner

(57) **Abstract**

The present invention aims to provide a surface member to be disposed on a base member of an outdoor flooring. The surface member contains a thermoplastic resin and is provided with foam cells foamed using a physical foaming agent. The foam cells have an average diameter of 30 to 200 µm and are dispersed in a planar direction and a thickness direction of the surface member, and are broken on the surface of the surface member.

## Description

### TECHNICAL FIELD

The present invention relates to a surface member of flooring, and a method for producing the same.

### BACKGROUND ART

JP 2014-129511A discloses a surface member used for flooring or the like. This surface member is provided with a skin layer having a high density on the front side thereof, and a base portion having a low density in the skin layer. This reduces thermal conductivity, and makes it difficult for heat to be transmitted to hands and feet even when the hands and feet come into contact therewith. Also, recesses and protrusions are formed on the surface of the skin layer through mechanical processing or the like.

JP 2014-129511A is an example of related art.
However, there is a problem that the sizes of recesses and protrusions are small and the skin layer has a poor wood texture because the recesses and protrusions are formed on the surface of the skin layer through mechanical surface roughening. The present invention was made to solve this problem and aims to provide a surface member for flooring with which a wood texture can be improved, and a method for producing the same.

### SUMMARY OF THE INVENTION

Aspect 1. A surface member to be disposed on a base member of flooring,
the surface member containing a thermoplastic resin,
the surface member being provided with foam cells foamed using a physical foaming agent,
the foam cells having an average diameter of 30 to 200 µm and being dispersed in a planar direction and a thickness direction of the surface member, and
at least some of the foam cells being broken on a surface of the surface member.

Aspect 2. The surface member according to Aspect 1, in which a distance between adjacent foam cells is 20 to 400 µm.

Aspect 3. The surface member according to claim 1 or 2, in which the surface member include 5 to 60 of the foam cells per 1 mm².

Aspect 4. The surface member according to any one of Aspects 1 to 3, in which an average aspect ratio of vertical outer diameters of the foam cells in the surface member to horizontal outer diameters of the foam cells in the surface member is 0.5 to 10.

Aspect 5. The surface member according to any one of Aspects 1 to 4, in which the thermoplastic resin contains at least one of ABS resin, ASA resin, AES resin, SAS resin, and acrylic resin.

Aspect 6. The surface member according to any one of Aspects 1 to 5, in which the surface member has an extensional viscosity at breakage of 1×10⁴ to 2×10⁶ Pa•s at 200°C.

Aspect 7. The surface member according to any one of Aspects 1 to 6, further containing wood flour.

Aspect 8. The surface member according to Aspect 7, in which the wood flour has an average particle diameter of 30 to 400 µm.

Aspect 9. The surface member according to Aspect 7 or 8, in which the surface member contains the wood flour in an amount of 5% by weight to 20% by weight with respect to 100% by weight of the thermoplastic resin.

Aspect 10. The surface member according to any one of Aspects 1 to 9, in which the surface member has a thickness of 100 to 500 µm.

Aspect 11. The surface member according to any one of Aspects 1 to 10, in which recesses and protrusions that are continuous with each other and have a width of 1 to 10 mm, a height of 0.1 to 1 mm, and a radius of curvature of 0.3 to 10 mm are formed on the surface member.

Aspect 12. The surface member according to Aspect 11, in which recesses and protrusions that are continuous with each other and have a width of 0.05 to 0.5 mm, a height of 0.05 to 0.2 mm, and a radius of curvature of 0.01 to 0.1 mm are formed on surfaces of the recesses and protrusions of the surface member.

Aspect 13. A method for producing a surface member to be disposed on a base member of flooring, the method including
a step of forming the surface member by kneading a thermoplastic resin and capsules enclosing a physical foaming agent to obtain a mixture, and molding the mixture through extrusion molding,
in which the surface member contains the capsules enclosing the physical foaming agent in an amount of 1% by weight to 3% by weight with respect to 100% by weight of the thermoplastic resin.

Aspect 14. The method for producing a surface member of flooring according to Aspect 13, the method including
kneading wood flour together with the thermoplastic resin and the capsules,
in which the surface member contains the wood flour in an amount of 5% by weight to 20% by weight with respect to 100% by weight of the thermoplastic resin.

Aspect 15. The method for producing a surface member of flooring according to Aspect 13 or 14, further including
a step of providing the surface member with recesses and protrusions that are continuous with each other by irradiation with a CO₂ laser, the recesses and the protrusions having a width of 0.05 to 0.2 mm, a height of 0.03 to 0.1 mm, and a radius of curvature of 0.01 to 0.1 mm.

According to the present invention, it is possible to improve a wood texture.

### BRIEF DESCRIPTION OF THE DRAWINGS

FIG. 1 is a cross-sectional view of flooring according to an embodiment of the present invention.
FIG. 2 is an enlarged cross-sectional view of a surface member.
FIG. 3 is a photograph showing an example of a surface member in which foam cells are broken.
FIG. 4 is a cross-sectional view showing an example of a surface of a surface member.
FIG. 5 is a cross-sectional view showing an example of a surface of a surface member.
FIG. 6 shows glossiness and surface roughness of working examples and comparative examples before a friction test.
FIG. 7 shows glossiness and surface roughness of working examples and comparative examples after a friction test.
FIG. 8 shows an image of a cross-section of a working example obtained through SEM.

### EMBODIMENTS OF THE INVENTION

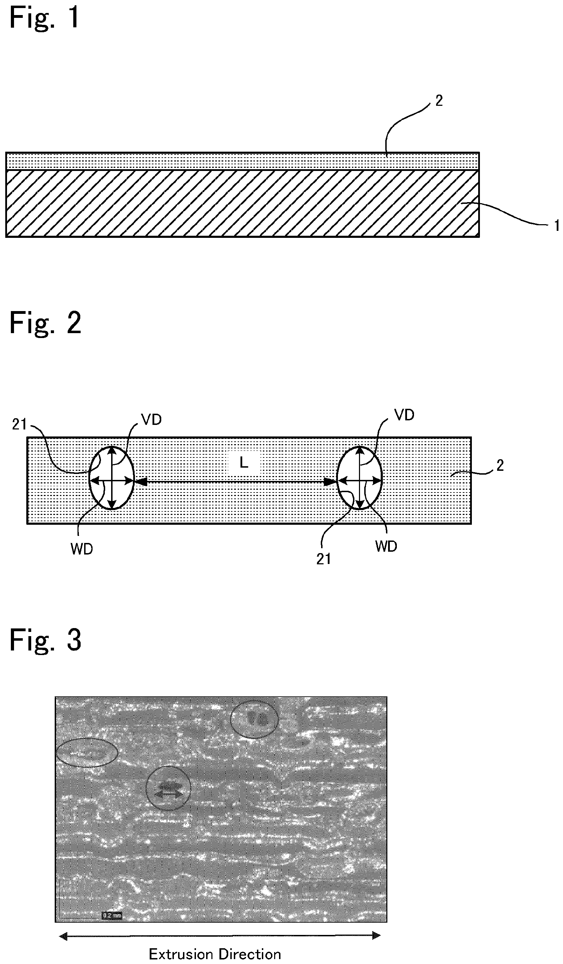

An embodiment of flooring on which a surface member according to the present invention is laminated will be described below with reference to the drawings. FIG. 1 is a cross-sectional view of the flooring.

As shown in FIG. 1, the flooring includes a plate-shaped base member 1 and a surface member 2 laminated on an upper surface of the base member 1. This flooring can be used as flooring such as an outdoor deck material, for example. In addition, the flooring can also be used as indoor flooring. The following describes each member in detail.

### 1. Base member

The base member 1 is made of polyvinyl chloride (PVC), polypropylene (PP), polyethylene (PE), acrylonitrile-butadiene-styrene copolymer (ABS), acrylonitrile-styrene-acrylonitrile copolymer (ASA), acrylonitrile/ethylenepropylene-diene/styrene copolymer (AES), silicon • acrylonitrile • styrene, or the like, for example. Note that it is also possible to form the base member 1 using the same foam cell-containing material as that of the surface member, which will be described later.

The thickness of the base member 1 is not particularly limited, and can be 1 to 50 mm, for example.

### 2. Surface member

The surface member 2 contains a thermoplastic resin and is provided with cells foamed using a physical foaming agent in the thermoplastic resin, and at least some of the foam cells are broken on the surface of the surface member 2. Although not essential, wood flour may be added thereto in order to improve the tactile wood texture.

### 2-1. Thermoplastic resin

There is no particular limitation on the thermoplastic resin, and known thermoplastic resins can be used as appropriate. Specific examples thereof include thermoplastic resin containing one or more of polyolefin-based resins such as polyethylene and polypropylene, polyamide, polyacetal, polyethylene, terephthalate, polybutylene terephthalate, fluorine-based resin, polyphenylene sulfide, polystyrene, acrylonitrile-styrene resin (AS resin), acrylonitrile-butadiene-styrene resin (ABS resin), acrylonitrile-ethylene-styrene resin (AES resin), acrylate-styrene-acrylonitrile resin (ASA resin), silicon-acrylonitrile-styrene resin (SAS resin), acrylic resin, polycarbonate, polyurethane, polyvinyl chloride, polyphenylene oxide, and ethylene-vinyl acetate copolymers. Among these thermoplastic resins, ABS resin, AES resin, ASA resin, SAS resin, acrylic resin, or a mixed resin containing at least one of these resins are preferable from the viewpoint of impact resistance, rigidity, and weather resistance.

### 2-2. Wood flour

Although there is no particular limitation on wood flour, it is possible to use pulverized wood such as pulverized conifers, broad-leaved trees, and lauan wood or pulverized materials such as pulverized bark, grain husks, and waste wood, for example. The diameter of the wood flour particles is not particularly limited, and the average diameter thereof can be 30 to 400 µm, for example.

The content of wood flour may be 5% by weight to 20% by weight, and preferably 10% by weight to 15% by weight with respect to 100% by weight of the thermoplastic resin. This is because, if the content of wood flour is lower than 5% by weight, the tactile wood texture will become poor, whereas if the content of wood flour is higher than 20% by weight, wood flour will come off from the surface due to deterioration over time, and the resulting holes will degrade the appearance of the wood texture.

### 2-3. Additives

It is possible to add, to the surface member according to the present invention, a coloring agent, a lubricant for improving workability and moldability, a processing aid, and other known additives such as a light stabilizer, an ultraviolet inhibitor, an antioxidant, and an antistatic agent.

Examples of the coloring agent include organic pigments such as azo-based, azomethine-based, methine-based, indanthrone-based, anthraquinone-based, pyranthrone-based, flavanthrone-based, benzenethrone-based, phthalocyanine-based, quinophthalone-based, perylene-based, perinone-based, dioxazine-based, thioindigo-based, isoindolinone-based, isoindoline-based, pyrrolopyrrole-based, and quinacridone-based pigments, and black pigments such as carbon black, graphite, titanium black, and black iron oxides. Examples thereof also include white pigments (e.g., calcium carbonate, titanium oxide, zinc oxide, and zinc sulfide), yellow pigments (e.g., cadmium yellow, yellow lead, titanium yellow, zinc chromate, ocher, and yellow iron oxide), red pigments (e.g., red mouth pigments, amber, red iron oxide, and cadmium red), blue pigments (e.g., Prussian blue, ultramarine blue, and cobalt blue), and green pigments (e.g., chrome green). Although there is no particular limitation on the color of the surface member, the surface member 2 may be colored in any one of various colors such as brown, pine, gray, white, beige, or black in order to improve the wood texture.

Examples of the lubricant include silicone compounds such as alkylsiloxanes, alkylphenylsiloxanes, and alkylhydrogensiloxanes.

Also, examples of the lubricant include fatty acid metal salts such as lithium stearate, magnesium stearate, calcium stearate, barium stearate, zinc stearate, calcium laurate, barium laurate, zinc laurate, calcium ricinoleate, barium ricinoleate, zinc ricinoleate, and zinc octylate.

Examples of the processing aid include acrylic processing aids, acrylate copolymers, styrene-acrylonitrile copolymers, and methyl methacrylate-styrene-vinyl acetate copolymers.

Examples of the light stabilizer and ultraviolet inhibitor include 2-(2'-hydroxy-5'-methylphenyl)-benzotriazole, 2-hydroxy-4-octoxybenzophenone, 2-(2'-hydroxy-5'-tert-octylphenyl)benzotriazole, 2-(2'-hydroxy-3,5'-di-tert-butylphenyl)-benzotriazole, 2-(2'-hydroxy-3,5'-di-tert-butylphenyl)-5-chlorobenzotriazole, 2-(2'-hydroxy-3'-tert-butyl-5'-methylphenyl)-5-chlorobenzotriazole, 2-hydroxy-4-methoxybenzophenone, poly[1-(2'-hydroxyethyl)-2,2,6,6-tetramethyl-4-hydroxypiperidyl succinate], bis(2,2,6,6-tetramethyl-4-piperidine)sebacate, 2-hydroxy-4-methoxybenzophenone-5-sulfonic acid, 2-phenyl-1H-benzo[d]imidazole-5-sullfonic acid, 2-(2'-hydroxy-3'-5'-di-tert-butyl)benzotriazole, 2,2'-dihydroxy-4-methoxybenzotriazole, hindered amine light stabilizers (HALS), and titanium dioxide.

Examples of the antioxidant include tetrakis[methylene(3,5-di-tert-butyl-4-hydroxyhydrocinnamate)]methane, octadecyl 3-(3,5-tert-butyl-4-hydroxyphenyl)propionate, tris-(2,4-tert-butylphenyl)phosphite, didodecyl 3,3-thiodipropionate, bis(2,4-dicumylphenyl)pentaerythritol diphosphite, hindered phenol, secondary aromatic amines, and benzofuranone.

Examples of the antistatic agent include nonionic antistatic agents such as polyoxyethylene alkyl ethers, polyoxyethylene derivatives, sorbitan fatty acid esters, polyoxyethylene sorbitan fatty acid esters, polyoxyethylene sorbitol fatty acid esters, glycerin fatty acid esters, polyoxyethylene hydrogenated castor oil, polyoxyethylene alkylamines, and alkyl alkanolamides; cationic antistatic agents such as alkylamine salts and quaternary ammonium salts; anionic antistatic agents such as alkyl sulfuric acid ester salts, polyoxyethylene alkyl ether sulfuric acid esters, alkylbenzene sulfonic acid salts, sodium dialkyl sulfosuccinates, and sodium alkyl diphenyl ether disulfonates; cationic antistatic agents having a cationic group such as a pyridinium salt, or a primary, secondary, or tertiary amino group; anionic antistatic agents having an anionic group such as a sulfonic acid salt group, sulfuric acid ester salt group, a phosphoric acid ester salt group, or a sulfonic acid salt group; amphoteric antistatic agents such as amino acid antistatic agents and amino sulfuric acid ester antistatic agents; nonionic antistatic agents such as amino alcohol antistatic agents and polyethylene glycol antistatic agents; and polymeric antistatic agents obtained by increasing the molecular weight of the above antistatic agents.

### 2-4. Foam cells

The surface member 2 according to the present invention contains foam cells foamed using a physical foaming agent, and the foam cells are dispersed in the planar direction and the thickness direction of the surface member 2. Foam cells 21 preferably have an average diameter of 30 to 200 µm, and more preferably have an average diameter of 50 to 150 µm, for example. The average diameter of the foam cells 21 can be calculated as follows. Specifically, a cross-sectional SEM image of the surface member 2 is magnified by 100 times, and the diameters (maximum outer diameters) of ten foam cells are measured visually. Then, the average of the ten diameters obtained above is used as the average diameter of the foam cells. When the average diameter of the foam cells is in the aforementioned range, it is possible to provide the surface with the appearance of natural wood.

As shown in FIG. 2, the average aspect ratio of vertical outer diameters VD of the foam cells 21 to horizontal outer diameters WD of the foam cells 21 is preferably 0.5 to 10, and more preferably 1 to 5. The aspect ratio can be calculated as follows. Specifically, a cross-sectional SEM image of the surface member 2 is magnified by 30 times, ten adjacent foam cells are visually selected, the maximum horizontal outer diameter WD of the ten foam cells and the maximum vertical outer diameter VD of the ten foam cells are each measured, and the aspect ratios of the foam cells are calculated. Then, the average of the ten aspect ratios obtained above is used as the aspect ratio of the foam cells.

As shown in FIG. 2, a distance L between adjacent foam cells 21 is preferably 20 to 400 µm, and more preferably 50 to 300 µm. The distance between foam cells 21 can be calculated as follows. Specifically, a cross-sectional SEM image of the surface member 2 is magnified by 100 times, ten adjacent foam cells 21 are visually selected, the distance between adjacent foam cells is measured, and the average of the distances therebetween is used as the distance between foam cells.

Further, the surface member 2 preferably includes 5 to 60 of the foam cells 21, and more preferably contains 20 to 50 foam cells, per 1 mm² of the cross-sectional SEM image.

The foam cells 21 described above can be produced using, for example, thermally expandable microcapsules in which a physical foaming agent is enclosed in an outer shell, or the like. The surface member 2 having the foam cells 21 can be formed by introducing the above-described thermoplastic resin, wood flour, and thermally expandable microcapsules enclosing the physical foaming agent into the hopper of an extruder, melt-kneading the resulting mixture, and extruding the mixture into the air through a mold, for example. In this case, the surface member 2 may contain wood flour in an amount of 5% by weight to 20% by weight, and thermally expandable microcapsules enclosing the physical foaming agent in an amount of 0.5% by weight to 3% by weight with respect to 100% by weight of the thermoplastic resin, for example. Also, even when the surface member does not contain wood flour, the surface member 2 can contain thermally expandable microcapsules enclosing the physical foaming agent in an amount of 0.5% by weight to 3% by weight with respect to 100% by weight of the thermoplastic resin, for example. This is because, if the content of the physical foaming agent is lower than 0.5% by weight, recesses and protrusions will decrease in size, making it difficult to impart a wood texture, whereas if the content of the physical foaming agent is higher than 3% by weight, foam cells will break excessively, the base member will be exposed, and the appearance of natural wood will not be obtained.

The physical foaming agent is a forming agent used in a foaming method in which a foam layer is formed by a gas component that is generated or expands through heating or a pressure reduction. A representative example of the physical foaming agent is a liquefied gas or the like, and it is particularly preferable that the physical foaming agent becomes gaseous at a temperature the same as or lower than the softening point temperature of the outer shells of the thermally expandable microcapsules. Examples thereof include low molecular weight hydrocarbons such as ethane, ethylene, propane, propene, n-butane, isobutane, n-butene, isobutene, n-pentane, isopentane, neopentane, n-hexane, heptane, isooctane, and petroleum ether, chlorofluorocarbons (CFCs) such as CCl3F, CCl2F2, CClF3, and CClF2-CClF2, and fluorocarbons (FCs), hydrochlorofluorocarbon (HCFC), hydrofluorocarbon (HFC), hydrofluoroolefin (HFO), and tetraalkylsilanes such as tetramethylsilane, trimethyleethylsilane, trimethylisopropylsilane, and trimethyl-n-propylsilane. In addition, it is possible to use a method for physically foaming a material such as carbon dioxide, nitrogen, or helium in a supercritical state. In particular, n-butane, isobutane, n-butene, isobutene, n-pentane, isopentane, neopentane, n-hexane, heptane, isooctane, petroleum ether, HFC, and HFO are preferable from the viewpoint of handling, expansion properties, environmental aspects, and the like. These physical foaming agents may be used alone, or two or more thereof may be mixed or used in combination.

During production, thermally expandable microcapsules containing the physical foaming agent described above can be added to the above-described thermoplastic resin. It is preferable to use, as thermally expandable microcapsules, synthetic resin capsules serving as outer shells, in which the above-described physical foaming agent is enclosed. In particular, it is preferable to use thermally expandable microcapsules whose outer shells expand due to expansion of the enclosed physical foaming agent during the above-described extrusion molding, and that melt depending on temperature conditions during molding and maintain their spherical shapes when molding is complete.

From the viewpoint of thermal meltability and extensional viscosity properties during expansion, thermoplastic resins are used as a material of the outer shells of the thermally expandable microcapsules, and in particular, copolymers containing a nitrile-based monomer as one of the monomer components are preferable, and especially acrylonitrile and methacrylonitrile are particularly preferable. Examples of the other monomer components that are copolymerizable therewith include acrylic acid, methacrylic acid, acrylic acid ester, methacrylic acid ester, styrene, vinyl acetate, and vinylidene chloride. Further, these thermoplastic resins may be used alone or in combination of two or more.

Some of the foam cells are broken on the surface of the surface member 2, and cell breakage refers to a state in which one or more exposed voids with a size of 0.1 mm or more are present in 1 cm² of the surface member 2 in the direction in which the surface member 2 is extruded, when the surface member 2 is observed from above. Circled portions in FIG. 3 indicate broken foam cells, for example.

### 2-5. Physical properties of surface member

The thickness of the surface member 2 is not particularly limited, and can be 100 to 500 µm, for example.

The surface member 2 preferably has an extensional viscosity at breakage of 1×10⁴ to 2×10⁶ Pa•s at 200°C. If this extensional viscosity is larger than 1×10⁵ Pa•s, continuous foaming will occur and the cell diameter will increase, whereas if the extensional viscosity is smaller than 1×10⁴ Pa•s, the cell diameter will decrease and the surfaces of the cells are unlikely to break, and thus the appearance of natural wood can not be obtained. Note that the extensional viscosity can be measured under the following conditions.
- Measuring apparatus: ARES-G2 (manufactured by TA instruments)
- Deformation mode: uniaxial extension
- Measurement temperature: 200°C
- Strain rate: 0.1 S⁻¹, 1 S⁻¹, 10 S⁻¹
- Environment: under N₂

### 2-6. Properties of surface of surface member

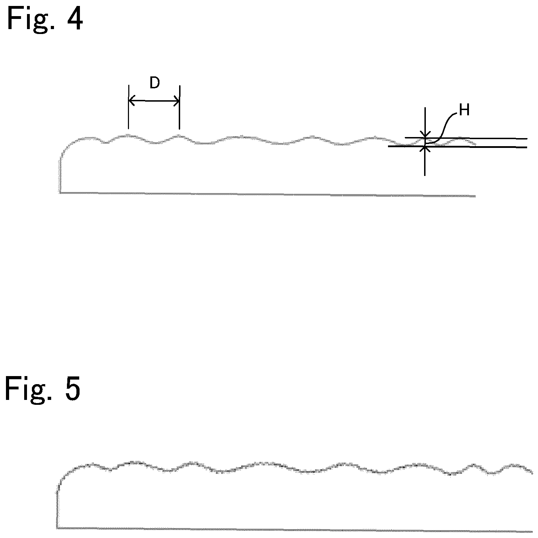

As shown in FIG. 4, the surface of the surface member 2 can be provided with recesses and protrusions that are continuous with each other in one direction on a cross-section thereof, for example. Although the sizes of such recesses and protrusions are not particularly limited, a width D (the distance between adjacent recesses) may be 1 to 10 mm, a height H (the maximum distance from a recess to a protrusion) may be 0.1 to 1 mm, and a radius of curvature (radius of curvature at the leading end of a protrusion) may be 0.3 to 10 mm, for example. Formation of such recesses and protrusions can suppress the glossiness of the surface member 2 and improve the wood texture thereof. Also, the width and the height of the recesses and protrusions need not be constant, and the recesses and protrusions may be formed randomly.

Further, as shown in FIG. 5, minute recesses and protrusions that are continuous with each other can also be formed on the surfaces of the above recesses and protrusions. Although the sizes of such minute recesses and protrusions are not particularly limited, the width may be 0.05 to 0.5 mm, the height may be 0.05 to 0.2 mm, and the radius of curvature may be 0.01 to 0.1 mm. Formation of such minute recesses and protrusions can further suppress the glossiness of the surface member 2 and further improve the wood texture thereof. Also, the width and the height of the minute recesses and protrusions need not be constant, and the minute recesses and protrusions may be formed randomly.

Note that unevenness such as that described above can be provided using a mold for extrusion molding, which will be described below. Alternatively, the above recesses and protrusions can be formed if the surface of the surface member 2 obtained after extrusion molding is irradiated with a CO₂ laser.

### 2-6. Method for producing outdoor flooring

It is possible to produce outdoor flooring configured as described above in the following manner. As an example, flooring in which the base member 1 and the surface member 2 are formed as a single member can be produced by coextruding the material for the base member 1 and the material for the surface member 2 and joining the members in a mold. Note that the base member 1 and the surface member 2 can be extruded separately and then joined together using an adhesive or the like.

### 3. Features

The surface member 2 according to this embodiment contains a thermoplastic resin, and is provided with foam cells 21 foamed using a physical foaming agent. Also, the foam cells 21 have an average diameter of 30 to 200 µm, are dispersed in the planar direction and the thickness direction of the surface member 2, and are broken on the surface of the surface member 2, and thus the foam cells 21 can provide a wood texture. Furthermore, because the foam cells 21 are also dispersed in the thickness direction of the surface member 2, foam cells present in the surface member 2 become exposed due to weather resistance deterioration and wear, and thus recesses and protrusions continue to be formed on the surface thereof. Therefore, a wood texture can be maintained.

### Working Examples

The following describes working examples of the present invention. However, the present invention is not limited to the following working examples.

A surface member according to Working Example 1 was prepared as follows. First, ASA resin containing wood flour was prepared as a thermoplastic resin. 5% by weight of wood flour and 1% by weight of ADVANCELL P501, serving as thermally expandable microcapsules enclosing a physical foaming agent and manufactured by Sekisui Chemical Co., Ltd., were added to 100% by weight of the thermoplastic resin, and the resulting mixture was introduced into an extruder. The mixture was then melt-kneaded and extruded into a sheet having a flat surface to mold a surface member. The surface member had a thickness of 200 µm. Further, the foam cells had an average diameter of 100 µm. The surface member was then laminated on the base member. The base member was formed using polyvinyl chloride such that the total thickness of the base member and the surface member was 25 mm.

Working Example 2 was produced in the same manner as in Working Example 1 above, except that ASA resin containing no wood flour was used as a thermoplastic resin.

Further, natural wood SPF (Comparative Example 1), paulownia (Comparative Example 2), and artificial wood (Comparative Example 3: Rifare-EX manufactured by Sekisui Chemical Co., Ltd.) were prepared as comparative examples.

A wear test was performed on Working Examples 1 and 2 described above every 160 hours in an environment using a metal weather tester. In a friction test, Working Examples 1 and 2 and Comparative Example 3 were rubbed 15 times vertically and 15 times horizontally with #1500 sandpaper. Glossiness and surface roughness were measured at the same portion of each example before and after the wear test.

Glossiness was measured at a measurement angle of 85 degrees using GM-268 manufactured by Konica Minolta, Inc. Surface roughness was measured by SURF COM1800G manufactured by Tokyo Seimitsu Co., Ltd. Glossiness and surface roughness were used for evaluating the appearance of natural wood.

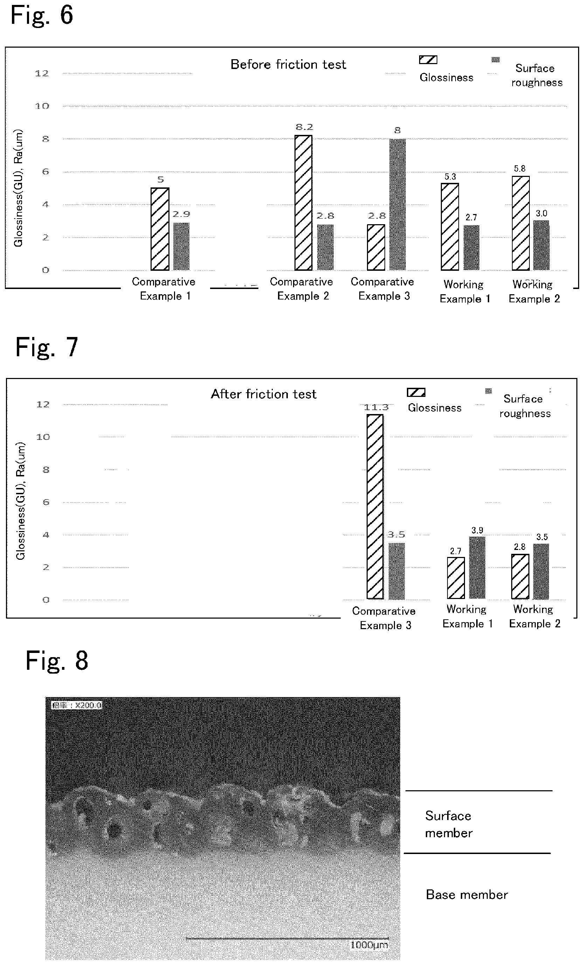

Results are shown in Table 1, and FIGS. 6 and 7 below. Also, FIG. 8 shows an image of a cross-section before a friction test was performed on Working Example 1.

**[Table 1]**

| | | Natural Wood | | Artificial Wood | Work. Ex. 1 | Work. Ex. 2 |
|---|---|---|---|---|---|---|
| | | SFP (Comp. Ex. 1) | Paulownia (Comp. Ex. 2) | Rifare (Comp. Ex. 3) | | |
| Glossiness (GU) | before wear test | 5.0 | 8.2 | 2.8 | 5.3 | 5.8 |
| | after wear test | - | - | 11.3 | 2.7 | 2.8 |
| Surface Roughness (µm) | before wear test | 2.9 | 2.8 | 8.0 | 2.7 | 3.0 |
| | after wear test | - | - | 3.5 | 3.9 | 3.5 |

As shown in Table 1 and FIG. 6, before the friction test, natural wood (Comparative Examples 1 and 2) and Working Examples 1 and 2 were similar to each other in glossiness and surface roughness. As shown in FIG. 8, in Working Example 1, it is conceivable that foam cells broke on the surface of the surface member, and thus the appearance of natural wood was obtained. On the other hand, artificial wood had low glossiness and large surface roughness, indicating a tendency opposite to that of the natural wood and Working Examples 1 and 2. This is because a smooth surface of artificial wood, which is molded through extrusion molding in order to improve its design, is generally roughened using sandpaper or the like in secondary processing, thus providing a surface texture.

As shown in Table 1 and FIG. 7, after the friction test, the surface texture of the artificial wood before the friction test was lost due to weather resistance deterioration and friction, and the surface of the artificial wood returned to a smooth surface close to the original smooth surface. As a result, glossiness increased and surface roughness decreased. Therefore, the appearance of natural wood was lost. Furthermore, there was a significant difference in glossiness and surface roughness between worn portions and unworn portions, and this tends to give an impression of degradation of the appearance of the artificial wood.

On the other hand, in Working Examples 1 and 2, glossiness was low, but surface roughness was slightly high. This is because foam cells were dispersed in the planar direction and the thickness direction of the surface member. That is, as described above, in Working Examples 1 and 2 before the friction test was performed, foam cells broke on the surfaces of the surface members and recesses and protrusions were formed, and foam cells present in the surface members became exposed due to weather resistance deterioration and wear, and recesses and protrusions continued to form. As a result, even after the friction test, glossiness and surface roughness that are similar to those of natural wood were exhibited, and thus the appearance of natural wood could be obtained.

### LIST OF REFERENCE NUMERALS

- 1: Base member
- 2: Surface member
- 21: Cell

## Claims

1. A surface member to be disposed on a base member of flooring,
the surface member containing a thermoplastic resin,
the surface member being provided with foam cells foamed using a physical foaming agent,
the foam cells having an average diameter of 30 to 200 µm and being dispersed in a planar direction and a thickness direction of the surface member, and
at least some of the foam cells being broken on a surface of the surface member.

2. The surface member according to claim 1,
wherein a distance between adjacent foam cells is 20 to 400 µm.

3. The surface member according to claim 1 or 2,
wherein the surface member includes 5 to 60 of the foam cells per 1 mm².

4. The surface member according to any one of claims 1 to 3,
wherein an average aspect ratio of vertical outer diameters of the foam cells formed in the surface member to horizontal outer diameters of the foam cells formed in the surface member is 0.5 to 10.

5. The surface member according to any one of claims 1 to 4,
wherein the thermoplastic resin contains at least one of ABS resin, ASA resin, AES resin, SAS resin, and acrylic resin.

6. The surface member according to any one of claims 1 to 5,
wherein the surface member has an extensional viscosity at breakage of 1×10⁴ to 2×10⁶ Pa•s at 200°C.

7. The surface member according to any one of claims 1 to 6, further comprising wood flour.

8. The surface member according to claim 7,
wherein the wood flour has an average particle diameter of 30 to 400 µm.

9. The surface member according to claim 7 or 8,
wherein the surface member contains the wood flour in an amount of 5% by weight to 20% by weight with respect to 100% by weight of the thermoplastic resin.

10. The surface member according to any one of claims 1 to 9,
wherein the surface member has a thickness of 100 to 500 µm.

11. The surface member according to any one of claims 1 to 10,
wherein recesses and protrusions that are continuous with each other and have a width of 1 to 10 mm, a height of 0.1 to 1 mm, and a radius of curvature of 0.3 to 10 mm are formed on the surface of the surface member.

12. The surface member according to claim 11,
wherein recesses and protrusions that are continuous with each other and have a width of 0.05 to 0.5 mm, a height of 0.05 to 0.2 mm, and a radius of curvature of 0.01 to 0.1 mm are formed on surfaces of the recesses and protrusions of the surface member.

13. A method for producing a surface member to be disposed on a base member of flooring, the method comprising
a step of forming the surface member by kneading a thermoplastic resin and capsules enclosing a physical foaming agent to obtain a mixture, and molding the mixture through extrusion molding,
wherein the surface member contains the capsules enclosing the physical foaming agent in an amount of 0.5% by weight to 3% by weight with respect to 100% by weight of the thermoplastic resin.

14. The method for producing a surface member of flooring according to claim 13, the method comprising
kneading wood flour together with the thermoplastic resin and the capsules,
wherein the surface member contains the wood flour in an amount of 5% by weight to 20% by weight with respect to 100% by weight of the thermoplastic resin.

15. The method for producing a surface member of flooring according to claim 13 or 14, further comprising
a step of providing the surface member with recesses and protrusions that are continuous with each other by irradiation with a CO₂ laser, the recesses and protrusions having a width of 0.05 to 0.2 mm, a height of 0.03 to 0.1 mm, and a radius of curvature of 0.01 to 0.1 mm.
